Europäisches Patentamt

European Patent Office

Office européen des brevets

(19)

(11) **EP 0 608 279 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(21) Anmeldenummer: **92920728.0**

(22) Anmeldetag: **06.10.1992**

(51) Int Cl.[6]: **H04Q 3/66**

(86) Internationale Anmeldenummer:
**PCT/EP92/02302**

(87) Internationale Veröffentlichungsnummer:
**WO 93/08666 (29.04.1993 Gazette 1993/11)**

(54) **VERFAHREN ZUR NICHTHIERARCHISCHEN VERKEHRSLENKUNG IN EINEM KOMMUNIKATIONSNETZ**

METHOD FOR THE NON-HIERARCHICAL ROUTING OF TRAFFIC IN A COMMUNICATIONS NET

PROCEDE POUR L'ECOULEMENT DU TRAFIC NON HIERARCHISE DANS UN RESEAU DE COMMUNICATION

(84) Benannte Vertragsstaaten:
**AT BE CH DE ES FR GB IT LI NL SE**

(30) Priorität: **15.10.1991 EP 91117567**

(43) Veröffentlichungstag der Anmeldung:
**03.08.1994 Patentblatt 1994/31**

(73) Patentinhaber: **SIEMENS AKTIENGESELLSCHAFT**
**80333 München (DE)**

(72) Erfinder: **HARTMANN, Harro, Lothar**
**D-3300 Braunschweig (DE)**

(56) Entgegenhaltungen:
EP-A- 0 376 556        EP-A- 0 449 480
WO-A-90/01237        WO-A-91/20148
US-A- 4 669 113        US-A- 4 788 721

• PROCEEDINGS OF THE NATIONAL COMMUNICATIONS FORUM Oktober 1985, ROSEMONT (US) Seiten 596 - 600 RICHARDS ET AL 'Towards Dynamic Network Control'
• INTERNATIONAL SWITCHING SYMPOSIUM Bd. 4, Maerz 1987, PHOENIX (US) Seiten 984 - 988 STACEY ET AL 'Dynamic alternative routing in the British Telecom trunk Network'

**Beschreibung**

Die Erfindung betrifft ein Verfahren zur nichthierarchischen Verkehrslenkung in einem Kommunikationsnetz gemäß dem Oberbegriff des Anspruchs 1.

Ein Verfahren gemäß dem Oberbegriff des Anspruchs 1 ist bereits aus der Druckschrift ITC-11 (1985) pp. 795-801, "use of a trunk status map for real-time DNHR" von G.R. Ash bekannt. Das bekannte Verfahren weist bei Überlast signifikante Durchsatzeinbußen auf.

Ein Verfahren gemäß dem Oberbegriff des Anspruchs 1 ist des weiteren auch aus dem Dokument US-A- 4 669 113 bekannt.

Aus dem Dokument EPA- 0 449 480 ist des weiteren ein dezentrales und echtzeitnahes Routingverfahren bekannt, bei dem immer nur ein einziger Alternativweg benutzt wird.

Aus dem Dokument EP-A- 0 376 556 ist ebenfalls ein dezentrales und echtzeitnahes Routingverfahren bekannt, bei dem immer nur ein einziger Alternativweg benutzt wird.

Aus dem Dokument "Dynamic alternative routing in the British Telecom trunk Network", Stacey et al., ISS 87 ist ebenfalls ein dezentrales und echtzeitnahes Routing-verfahren bekannt, bei dem immer nur ein einziger Alternativweg benützt wird. Sobald ein auf diesen Alternativweg überlaufender call blockiert wird, wird nach dem Zufallsprinzip ein anderer möglicher Alternativweg ausgewählt, der dann im weiteren wiederum als der eine einzige Alternativweg für den Uberlaufverkehr benutzt wird.

Alle bisher bekannten dynamischen Verfahren zur nichthierarchischen Verkehrslenkung erzielen nur in bestimmten Verkehrslastbereichen optimale Durchsatzwerte, d.h. sie weisen signifikante Durchsatzeinbußen entweder bei Überlast oder bei Hoch- oder Planungslast auf.

Der Erfindung liegt das Problem zugrunde, über alle Verkehrslastbereiche optimale Durchsatzwerte zu erzielen. Dieses Problem wird durch die Merkmale des Anspruchs 1 gelöst.

Durch die echtzeitig zustandsgesteuerte Adaption der Zahl und Reihenfolge der für den Verkehr verfügbaren Alternativwege, d.h. der Alternativwegesequenz, werden in allen Lastbereichen nahezu optimale Durchsatzwerte oder minimale Transportkosten erzielt.

Sind sämtliche Alternativwege eines Verkehrspaares überlastet, so sind für den Verkehr schließlich nur noch die Planwege bzw. der Planweg verfügbar.

Durch diese zustandsgesteuerte Wegeselektion wird einerseits die verkehrspaarspezifische Hochlast vermindert, gleichzeitig jedoch die Hintergrundlast (Verkehr über Planwege zuzüglich Überlauf aus anderen Netz abschnitten) auf den betroffenen Linkabschnitten begünstigt. Daher steigt der erfolgreiche Durchsatz des gesamten Kommunikationsnetzes an. Das erfindungsgemäße Verfahren zur nichthierarchischen Verkehrslenkung arbeitet daher konservativ reservierend und verträglich zu anderen Routing-Umgebungen. Es nutzt echtzeitig die im allgemeinen nicht koinzidierenden Verkehrsminima (Multi Hour Routing) durch wissende Zuweisung freier Kanäle (Multi Service Routing).

Das erfindungsgemäße Verfahren kann als zustandsgesteuertes dynamisches nichthierarchisches Routing-Verfahren (State- Controlled Dynamic Nonhierarchical Routing, kurz SDNHR) bezeichnet werden.

Das erfindungsgemäße Verfahren besitzt insbesondere den Vorteil, daß die Verkehrslast auf den Signalisierungskanälen gegenüber einem zentralen Routing-Verfahren verringert und somit der Durchsatz gefördert wird. Dies ist insbesondere bei einem Kommunikationsnetz mit vielen Vermittlungsknoten und einer großen Anzahl von Alternativwegen von Bedeutung. Im übrigen wird die Processing Load auf die lokalen Prozessoren verteilt. Dadurch werden sicherheitsrelevante echtzeitig effiziente Routing-Verfahren mit dezentralem "Processing Load Sharing" realisierbar.

Eine Ausführungsform des erfindungsgemäßen Verfahrens gemäß Anspruch 2 besitzt insbesondere den Vorteil, daß der Ursprungsvermittlungsknoten den Verkehrsbelastungszustand eines Alternativweges auf einfache Weise einstufen kann.

Eine weitere Ausführungsform des erfindungsgemäßen Verfahrens gemäß Anspruch 3 besitzt insbesondere den Vorteil, daß der Ursprungsvermittlungsknoten den Verkehrsbelastungszustand eines Alternativweges unter lernender Berücksichtigung der Folge-Link- Belastungen einstufen kann.

Eine weitere Ausführungsform des erfindungsgemäßen Verfahrens gemäß Anspruch 4 besitzt insbesondere den Vorteil, daß der Ursprungsvermittlungsknoten den Verkehrsbelastungszustand eines Alternativweges unter Berücksichtigung der Zustände der Folge- Links einstufen kann, ohne ein Verfahren zur Schätzung der Blockierungswahrscheinlichkeit eines Alternativweges anwenden zu müssen.

Eine weitere Ausführungsform des erfindungsgemäßen Verfahrens gemäß Anspruch 5 besitzt insbesondere den Vorteil, daß der Alternativwegeverkehr (Uberlaufverkehr) im Überlastfall noch stärker zugunsten des Planverkehrs verdrängt wird.

Es folgt die Figurenliste der Zeichnung.

FIG 1 zeigt ein Kommunikationsnetz, bei dem das erfindungsgemäße Verfahren angewandt wird.

FIG 2 zeigt die in einem Vermittlungsknoten zur Realisierung des erfindungsgemäßen Verfahrens vorhandene Processing- Struktur.

FIG 3 veranschaulicht die Durchsatzoptimierung bei adaptiver Wegefächersteuerung.

FIG 4 zeigt die Verringerung des Processing Load Ratio (PRLR) bei verschiedenen Ausführungsformen des erfindungsgemäßen Verfahrens.

Im folgenden wird eine spezielle Ausführungsform des erfindungsgemäßen Verfahrens anhand der Zeichnungen näher erläutert.

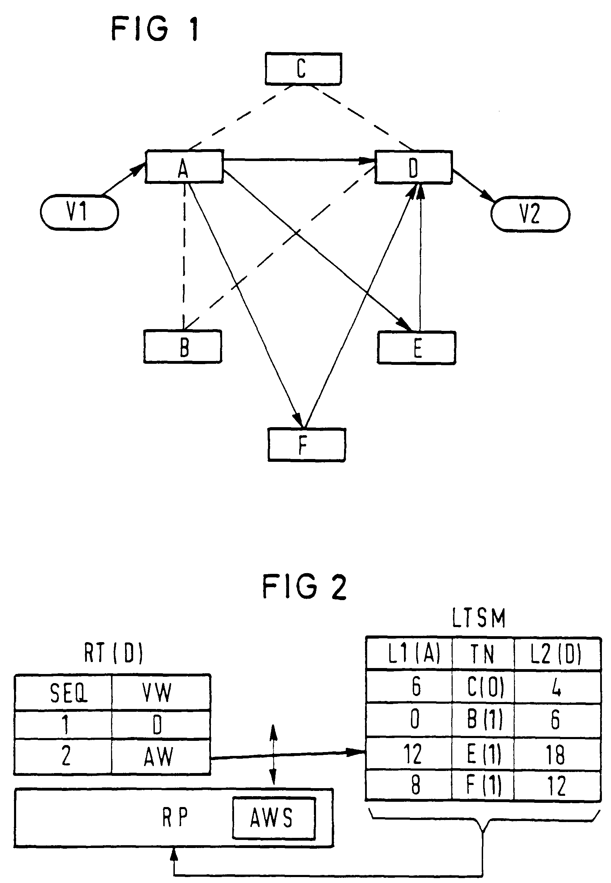

FIG 1 zeigt ein Kommunikationsnetz, das Vermittlungsknoten A, B, C, D, E und F beinhaltet. Jeder der dargestellten Vermittlungsknoten A bis F arbeitet mit einem vom Netzbetreiber bzw.

FIG 1 zeigt ein Kommunikationsnetz, das Vermittlungsknoten A, B, C, D, E und F beinhaltet. Jeder der dargestellten Vermittlungsknoten A bis F arbeitet mit einem vom Netzbetreiber bzw. einem zentralen Netzmanagement planerisch vorgegebenen Wegefächer, in dem neben einem Planweg (möglichst Direktweg) oder mehreren Planwegen eine zentral vorgegebene Anzahl M von Alternativwegen zu jedem Verbindungsziel bzw. Zielvermittlungsknoten enthalten sind. Im Falle mehrerer Planwege, ist die Reihenfolge dieser Planwege durch das zentrale Network-Engineering oder Network-Management vorgegeben. Die Anzahl und Reihenfolge der Alternativwege kann in außergewöhnlichen Netzsituationen ebenfalls durch das zentrale Network-Management z.B. in 5 min-Intervallen vorgegeben werden. Bei normalen Netzsituationen und damit in dominierenden Betriebszeitintervallen sind die Alternativwege jedoch potentielle Echtzeit- Wege. Erfindungsgemäß werden diese Alternativwege vom Routing-Prozeß dezentral und zustandsgesteuert den in einem Vermittlungsknoten eingehenden Verbindungsanforderungen (Calls) gemäß einer vom Routing-Prozeß in relativ kleinen Zykluszeiten ermittelten Alternativwegesequenz zugewiesen. FIG 1 zeigt des weiteren eine erste Vermittlungsstelle V1, die über den Vermittlungsknoten A an das nichthierarchische Kommunikationsnetz angeschlossen ist und eine zweite Vermittlungsstelle V2, die über den Vermittlungsknoten D an das nichthierarchische Kommunikationsnetz angeschlossen ist. Da der Anschluß der beiden Vermittlungsstellen V1 und V2 fest oder planerisch hierarchisch ist, vollzieht sich ein in FIG 1 dargestellter Verbindungsaufbau zwischen den Vermittlungsstellen V1 und V2 über die Vermittlungsknoten A und D des nichthierarchischen Kommunikationsnetzes. Die in den Ursprungsvermittlungsknoten A eingehenden Calls der Vermittlungsstelle V1 können über alternative Verbindungswege zum Zielvermittlungsknoten D vermittelt werden, was in FIG 1 durch nicht unterbrochene Verbindungspfeile dargestellt ist. Die in FIG 1 gestrichelt dargestellten Verbindungswege zwischen dem Ursprungsvermittlungsknoten A und dem Zielvermittlungsknoten D sind Verbindungswege, die vom Routingprozeß nicht ausgewählt wurden, d.h. in dem betrachteten Aufdatierungsintervalls (Route Update Intervall) nicht in die Alternativwegesequenz mitaufgenommen wurden.

FIG 2 zeigt die in dem ausgewählten Ursprungsvermittlungsknoten A zur Realisierung des erfindungsgemäßen Verfahrens vorhandene Processing-Struktur. Die im folgenden näher erläuterte Realisierung der Erfindung beinhaltet im allgemeinen Software- und Hardware-Komponenten mit abgestimmten Aufgabenzuweisungen.

Die in FIG 2 dargestellte Processing-Struktur umfaßt einen Routing-Prozeß RP, eine Routing-Tabelle RT(D) und eine lokale Trunk-Zustandstabelle LTSM. Der Routing-Prozeß RP dient zur Ermittlung einer Alternativwegesequenz AWS innerhalb der zentral zugelassenen Menge von M Alternativwegen. Dabei bedient er sich der lokalen Trunk-Zustandstabelle LTSM, in der die Zustände der Links sämtlicher Alternativwege abgespeichert sind, und gegebenenfalls eine binäre Aussage über die Verfügbarkeit von Transitknoten TN der Alternativwege enthalten ist.

Die Routing-Tabelle RT (D) enthält eine Wegesequenz SEQ von Verbindungswegen VW, durch die dem Vermittlungs-Prozeß im vorliegenden Beispiel an erster Stelle ein planerischer Direktweg D und an zweiter Stelle ein aktueller Alternativweg AW zur Verfügung gestellt wird. Der aktuelle Alternativweg AW wird dem Vermittlungsprozeß solange zur Verfügung gestellt, bis er vom Überlaufverkehr belegt ist bzw. eine Blockierung auftritt. Daraufhin erfolgt eine Meldung an den Routing-Prozeß RP, worauf dieser den gemäß der Alternativwegesequenz AWS nächsten Alternativweg als den neuen aktuellen Alternativweg anstelle des bisherigen aktuellen Alternativweges in die Routing-Tabelle einschreibt.

Die lokale Trunk-Zustandstabelle LTSM beinhaltet die Zustände aller zentral zugelassenen Alternativwege eines jeweiligen Ursprungs-Zielvermittlungsknotenpaares, hier z.B. des Vermittlungsknotenpaares A-D. Der Routing Prozeß ermittelt daraus innerhalb des Aufdatierungsintervalls die Alternativwegesequenz, d.h. die Reihenfolge und den Umfang der für den Überlaufverkehr herangezogenen Alternativwege. Alle im jeweils nächsten Aufdatierungsintervall eingehenden Calls nützen diese Alternativwegesequenz im sequentiellen Überlauf.

Im folgenden wird das spezielle Ursprungs-Zielvermittlungsknotenpaar A-D betrachtet.

Als erster Verbindungsweg ist dabei der Planweg D, der hier speziell ein Direktweg ist, vorgegeben. Als erster Alternativweg AW wird durch den Routing-Prozeß der am wenigsten belastete Verbindungsweg über den Vermittlungsknoten E vorgegeben. Der Vermittlungsknoten E stellt hierbei einen Transitknoten TN dar, der für den Verkehr verfügbar ist. Die Verfügbarkeit eines Transistknotens TN ist in der lokalen Trunk-Zustandstabelle durch einen in Klammern hinter der Bezeichnung des Transitknotens stehenden binären Wert ausgedrückt. Der erste Alternativweg verläuft über einen ersten Link L1 (A), der gemäß der lokalen Trunk-Zustandstabelle 12 freie Kanäle aufweist, und über einen zweiten Link L2 (D), der 18 freie Kanäle aufweist. Daher können auch eingehende Mehrkanal- Verbindungsanforderungen von bis zu 12 Kanälen diesem Alternativweg angeboten werden.

Das Zeitintervall, nach dem die lokale Trunk-Zustandstabelle mit nicht lokalen Zustandsinformationen aufdatiert wird, (Aufdatierungsintervall dT) beträgt etwa 10 sec. Dadurch ist einerseits eine echtzeitnahe Aufzeichnung der Belegungszustände der Alternativwege gewährleistet, andererseits die Abfragehäufigkeit der lokalen Trunk-Zustandstabelle und damit die Auswertungslast gering.

Der Routing-Prozeß sorgt dafür, daß die eingehenden Calls denjenigen Alternativwegen mit den jeweils größten durchgängig verfügbaren Kanalzahlen, d.h. mit der geringsten Verkehrsbelastung zugewiesen werden. Folgende Prozeßkomponenten sind hierzu erforderlich:

a) LTSM-Eintragungen im Raster des Aufdatierungsintervalls: Verfügbare Kanäle, abzüglich Trunk-Reservierung, abzüglich BIAS-Schätzwerte.
b) Zuweisung der eingehenden Calls auf den freiesten (most idle) Alternativweg mit Überlauf auf nachrangige Alternativwege. Die Rangordnung erfolgt nach abfallenden durchgängig freien Kanalzahlen.
c) Rufblockierung, falls kein Alternativweg verfügbar.

Ist der zweite Link des ersten Alternativweges beim Verbindungsaufbau entgegen der Aussage der lokalen Trunk-Zustandstabelle blockiert, erfolgt Crankback und es wird als zweiter Alternativweg der Verbindungsweg über den Transitvermittlungsknoten F herangezogen. Weitere Alternativwege sind in dem betrachteten Aufdatierungsintervall der lokalen Trunk-Zustandstabelle nicht verfügbar und können deshalb nicht für den Verbindungsaufbau herangezogen werden. Der Verbindungsweg über den Zwischenvermittlungsknoten B wird dabei mangels freier Kanäle auf dem ersten Link L1 (A) und der Verbindungsweg über den Zwischenvermittlungsknoten C infolge Überlast in C vom Routing-Prozeß nicht ausgewählt und damit dem Vermittlungsprozeß nicht zur Verfügung gestellt. Der Routing-Prozeß erzeugt somit aus einer zentral vorgegebenen Menge von M Alternativwegen eine nach freien Verbindungswegkapazitäten geordnete Teilmenge von Alternativwegen, wobei T ≤ M.

Bei eingehenden Mehrkanal-Calls sind die vorhandenen freien Verbindungskapazitäten in gleicher Rangordnung maßgebend. Die Zuweisung von zwei HO-Kanälen mit jeweils 384 kbit/s an benötigter Kapazität führt während des betrachteten Aufdatierungsintervalls beispielsweise zur Ausbuchung des Alternativweges über den Zwischenvermittlungsknoten E und damit zur Rangerniedrigung oder Ausbootung dieses Alternativweges im nächsten Aufdatierungsintervall.

Die in der lokalen Trunk-Zustandstabelle gemäß FIG 2 angegebene Zahl von freien Trunks eines Links ist bereits um eine bestimmte Zahl von Trunks verringert. Diese künstliche Verringerung berücksichtigt zum einen die gewöhnliche linkspezifische Trunkreservierung zur Durchsatzstabilisierung des Netzes und zum anderen eine BIAS-bezogene wegespezifische Trunkreservierung, um den im Raster des Aufdatierungsintervalls fortschreitenden Verkehrsbelastungszustand eines gesamten Alternativweges zu berücksichtigen (dezentral hochlastspezifisch feste oder adaptive Zweilink -Wegereservierung).

In Wirklichkeit ist die gemäß FIG 2 in der lokalen Trunk-Zustandstabelle gespeicherte Zahl von freien Trunks eines Links nicht bereits um eine bestimmte Zahl von Trunk verringert. Die genannte künstliche Verringerung erfolgt vielmehr durch den Routing-Prozeß zum Zwecke der Ermittlung der Alternativwegesequenz.

Die genannte BIAS-bezogene Trunkreservierung kann ebenfalls echtzeitnah in Abhängigkeit der Verkehrsbelastung eines Links verändert werden. Um den echtzeitnahen BIAS-Wert zu ermitteln, wird zum Ende jedes Prädiktionsintervalles (etwa gleich Aufdatierungsintervall dT) der Schätzwert des echtzeitigen linkspezifischen BIAS-Wertes BIAS(t) über das Prädiktionsintervall dT gebildet:

$$BIAS_i(t,dT) = dT \left( a_i(t,dT) - x_i(t)/t_m \right) \qquad (1)$$

wobei $a_i(t,dT)$ die Rufankunftsrate, $x_i(t)$ die Zahl der zum Zeitpunkt t aktuell belegten Trunks eines Links i, $t_m$ die mittlere Verbindungsdauer und $x_i(t)/t_m$ die Verbindungsbeendigungsrate sind. Diese BIAS-Schätzwerte sind selbst Zufallsgrößen. Insbesondere muß die Rufankunftsrate selbst gemäß

$$a_i(t,dT) = a_i(t-dT,dT) + (1 - ) Z_i(dT)/dT \qquad (2)$$

mit $0 \leq \beta \leq 1$ durch gleitende Mittelung aus der Zahl der Rufankünfte $Z_i(dT)$ im Prädiktionsintervall dT gewonnen werden. Für $\beta = 0$ resultieren beispielsweise nahezu zeitpunktartige jedoch variationsreiche Schätzungen, während $\beta = 1$ auf $a_i(t,dT) = a_i(O,dT)$ führt, also den Anfangswert fort schreibt.

Häufig werden die Werte $\beta = 0,9$ und $t_m = 180$ s verwendet.

Eine rein rechnerische Erwartungswertbildung über Gleichung (1) liefert veranschaulichend

$$E \left( BIAS_i(t,dT) \right) = \frac{dT}{t_m} \left( A_i(t) - y_i(t) \right) \qquad (3)$$

wobei nun $A_i(t)$ das Verkehrsangebot und $y_i(t)$ die Belastung der Link i im Zeitpunkt t sind. Diese Erwartungswertbildung ist echtzeitig, d.h. für dT << $t_m$, nicht realisierbar, kann jedoch zur Schätzung fester BIAS-Richtwerte in eperimentellen Lastsituationen verwendet werden. Betragen z.B. die aktuelle mittlere Bündelbelastung y = 80 Erl, das aktuell eingehende mittlere Angebot A = 116 Erl und das Verhältnis dT/$t_m$ = 0,10, so wäre der echtzeitnahe BIAS-Wert für das Zeitintervall von t bis (t + dT) gleich 3,6 zu setzen.

Im Wirkbetrieb sorgen die gleitenden Aufdatierungen von $a_i(t)$ und der aktuellen Zustandsinformationen $x_i(t)$ für eine angemessene BIAS-Adaption, welche z.B.

durch die Parameter dT und β so zu justieren ist, daß die Processing Load bei sehr hohen Lasten begrenzt bleibt. Da der Prädiktions-Fehler bei wachsendem Prädiktionsintervall dT steigt, ist dieses so klein wie möglich, jedoch größer als alle möglichen Round-Trip-Delays im Zeichengabesystem zu wählen, falls ein im folgenden noch näher zu erläuternder kooperativer Import von Zustandsinformationen für die Vervollständigung der lokalen Trunk-Zustandstabelle LTSM angewandt wird.

Die Informationen über die Verfügbarkeit eines Zwischenvermittlungsknotens TN sowie die Zustände eines zweiten Links L2 werden nach jedem Aufdatierungsintervall von den entsprechenden Zwischenvermittlungsknoten über die Zeichenkanäle importiert und in den lokalen Trunk-Zustandstabellen abgespeichert. Bei einem Kommunikationsnetz mit N Vermittlungsknoten müssen von jedem Ursprungsvermittlungsknoten der vorgegebenen Menge der Alternativwege entsprechend M zusätzliche Zweitlink-Zustandsmeldungen von (N-1) Zielvermittlungsknoten im Route Update Intervall dT = 10 s importiert und abgespeichert werden. Mit N = 64, M = 14 und 2 Byte pro Zustand eines Links bekäme die Datenbasis für den zweiten Link daher den Umfang von 28 Bytes für jedes Ziel und damit einen Gesamtumfang von 1,764 k Byte pro Ursprungsvermittlungsknoten für alle Ziele. Für den Meldungstransfer auf dem zentralen Zeichenkanal kann unterstellt werden, daß die Vermittlungsknoten weiterhin über assoziierte 64 kbit/s Zeichenkanäle gekoppelt bleiben. Die auf das Route Update Intervall verteilte Summenbitrate für den Import in die bzw. den Export aus der lokalen Trunk-Zustandstabelle beträgt daher pro Vermittlungsknoten 2 DB x 8/dT = 2,822 kbit/s. Der Meldungsaustausch erfolgt jedoch im MSU-Datagramm-Modus. Jede MSU (Message Signalling Unit) von brutto nominell etwa 272 Byte findet ihr Ziel innerhalb von etwa 100 msec. Pro MSU und Ziel sind M x 2 Byte = 28 Byte innerhalb von dT oder rund 0,1 MSU/s zu transferieren. Weiterhin werden von dem Ursprungsvermittlungsknoten alle Zwischenvermittlungsknoten zur Rückmeldung ihrer Last- und Ziel-Bündelzustände aufgefordert. Hierzu sind M Bit für die Informationen über die Verfügbarkeit des Zwischenvermittlungsknotens erforderlich.

Die Bündelzustände der Zweitlinkabschnitte können alternativ zum vorgenannten Abrufverfahren auch aus den Zwischenvermittlungsknoten herbeigeführt werden. Hierzu sind wiederum M (N - 1) 2 Byte erforderlich. Der Meldungsumfang ändert sich hierbei praktisch nicht.

Durch den kooperativen Transfer der Informationen aus den lokalen Trunk-Zustandstabellen zwischen den Vermittlungsknoten des nichthierarchischen Kommunikationsnetzes ergibt sich ein weitsichtiges Routing-Verfahren. Dies wiederum hat zur Folge, daß eine Entlastung des wesentlich kritischeren und kostenträchtigeren Call-Processings eintritt. Gleichzeitig entsteht ein lastteiliger und sicherheitsrelevanter Route- Processing-Verbund mit dezentralen Datenbeständen bei geringem Kommunikationsaufkommen. Vergleichsweise müßte bei einem entsprechenden Verfahren mit zentralem Routing-Prozeß das N-fache Datenbasis-Volumen innerhalb dT zu zwei sicherheitsrelevant räumlich diversitär arbeitenden Doppelrechnern übertragen werden, welche ihrerseits im gleichen Zeitraster aus N (N - 1), d. h. etwa $N^2$ Linkzuständen Alternativwegesequenzen mit bis zu M Alternativwegen generieren und in N dezentrale Tabellenspeicher zurücktransferieren müßten.

Anstelle des kooperativen Transfers der in den lokalen Trunk- Zustandstabellen gespeicherten Zweitlink-Zustandsinformationen zwischen den Vermittlungsknoten, kann auch ein Verfahren zum intelligenten Erlernen der Zustände der entsprechenden Links und Vermittlungsknoten angewandt werden. Dieses Verfahren könnte beispielsweise in der Weise realisiert werden, daß die genannten Zustände anhand bedingter Blockierungserfahrungen (Folgelinks blockiert unter der Bedingung Erstlinks frei) in größeren Zeitabständen aufdatierend geschätzt und aktualisiert werden. Diese Variante bietet sich insbesondere bei internationalen Verbindungen mit ausgeprägt mittelfristigen Multi Hour Verkehrsprofilen und eingeschränktem Austausch von Zustandsinformationen zwischen den Ursprungs- und Zielvermittlungsknoten, sowie mehr als zwei Linkabschnitten zwischen diesen Vermittlungsknoten an.

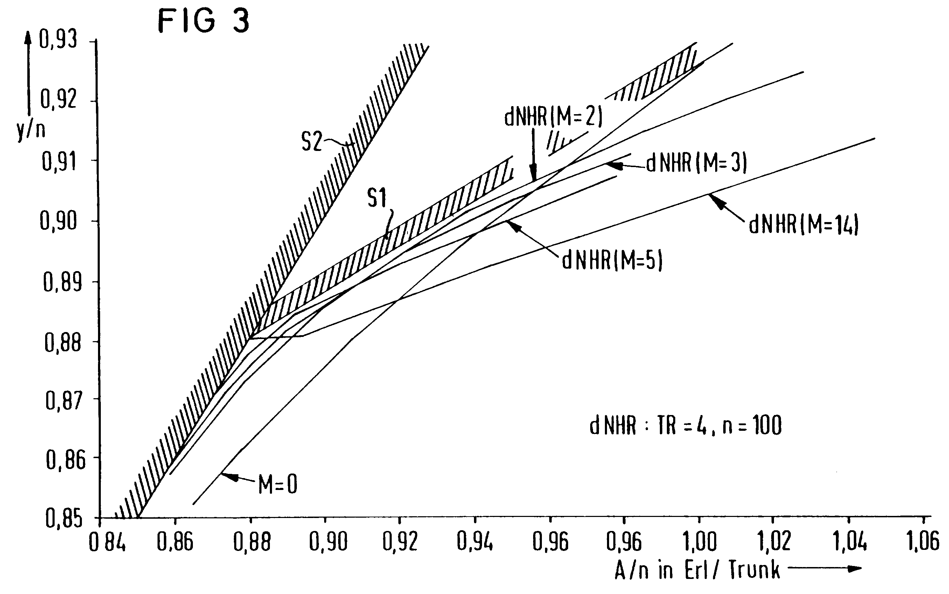

FIG 3 zeigt ausgewählte analytische Fallstudien für symmetrische und dynamisch nicht hierarchisch gesteuerte Kommunikationsnetze mit sequentiellem wechselseitigem Überlauf (dynamic non hierarchical routing dNHR). Die Symmetrie beinhaltet Vollvermaschung, n = 100 trunks pro Link und gleiche Verkehrsangebote A/n in Erl pro Trunk und Verkehrspaar, jedoch unterschiedliche Alternativwegefächergrößen M als einzig verbleibenden Optimierungsparameter im vorliegenden symmetrischen Fall. Als Trunkreservierung TR wird der zu n geeignetste Wert TR = 4 verwendet, und die BIAS-Werte werden vernachlässigt. Dargestellt wird der erfolgreiche Verkehrsdurchsatz, d.h. die normierte Verkehrsbelastung y/n in Erlang pro Trunk als Funktion des normierten Verkehrsangebotes A/n in Erlang pro Trunk.

Für M = 14 wird bis zum Angebot 0,88 Erl/Trunk ein nahezu verlustfreier Durchsatz erzielt. Ohne Trunkreservierung TR würde dem Knickpunkt ein sichelförmiger Durchsatzrückgang folgen. Bei höheren Verkehrsangeboten werden jedoch die höchstmöglichen Durchsatzwerte nur dann erzielt, wenn der Umfang des Alternativwegefächers, d.h. der Parameter M reduziert wird.

Für A/n > 1 Erl/Trunk dominiert schließlich mit M = 0 das ungesteuerte Kommunikationsnetz, denn anderenfalls würde der auf die Zweit-Link-Alternativwege gelenkte Verkehr den Direktverkehr der entsprechenden Links jeweils zweifach behindern.

Andererseits erhielten im Falle M = 0 alle überschüssig eingehenden Rufe bei kleineren Verkehrsangeboten trotz vorhandener Kapazitätsreserven von im Mittel (n - A) pro Link keine weiteren Erfolgschancen, so daß höhere Blockierungen im Prozentbereich gegenüber einer optimalen Wegefächergröße M>0 resultieren.

Das erfindungsgemäße zustandsgesteuerte dynamische nichthierarchische Routing-Verfahren (SDNHR) löst das genannte Adaptionsproblem jedoch nicht nur für symmetrische, sondern zugleich für unsymmetrische Netze. Wie ausgeführt, werden ausgelastete Alternativwege nicht verwendet, und darüber hinaus diejenigen Alternativwege vorrangig belegt, welche die größten nahezu echtzeitigen Kapazitätsreserven aufweisen. Zusätzlich wird der Gefahr von Alternativwegeüberselektionen durch adaptive BIAS-Prädiktionen im Route Update Intervall begegnet. Hierbei wird der Durchsatz abermals optimiert, so daß der in FIG 3 durch eine erste Schraffur S1 dargestellte Endbereich über alle Lasten approximiert wird. Dieser Bereich nähert sich ferner mit wachsenden Link-Kapazitäten für n 100 der idealen Grenzkurve ($y = A$ für $A \leq n$ bzw. $y = n$ für $A \geq n$, in FIG 3 durch eine zweite Schraffur S2 angedeutet).

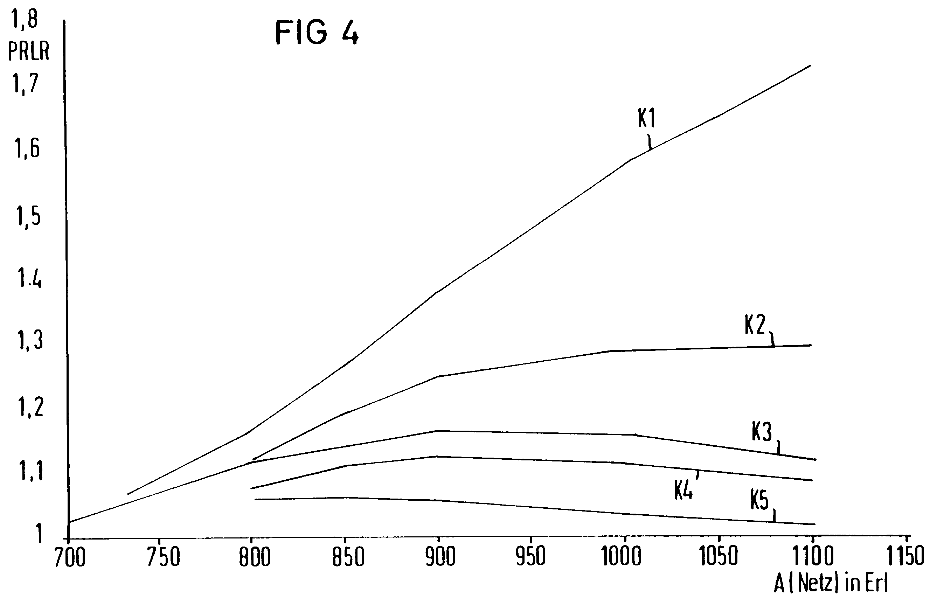

FIG 4 veranschaulicht Simulationen an einem unsymmetrischen Netz mit N = 5 Vermittlungsknoten und M = 3, und zwar hinsichtlich eines erwartbaren Processing Load Ratio PRLR bei überlastigen Verkehrsangeboten A in Erlang Erl.
Das Processing Load Ratio PRLR bezeichnet hierbei die mittlere Call Processing Load pro Call infolge sequentieller Alternativweg-Überläufe und Crankbacks.

Für planerische bzw. extreme Lasten strebt das Processing Load Ratio gegen 1, weil in diesen Fällen praktisch keine Verkehrsüberläufe auftreten bzw. zugelassen werden. In diesen Fällen wird also pro Call nur der planerische Weg aufgeprüft.

Eine erste Kurve K1 zeigt den PRLR-Verlauf eines Sequential Routing Verfahrens ohne Beteiligung einer lokalen Trunk- Zustandstabelle, wobei Rechnung und Simulationen bei vernachlässigbar kleinen Vertrauensintervallen übereinstimmen.

Signifikante Minderungen des Processing Load Ratio gemäß einer zweiten Kurve K2 ergeben sich im relevanten Hochlastbereich, wenn die lokal vorhandenen Zustandsinformationen der Erstlinks zur Aufdatierung der Routing-Sequenzen (Alterntivwegesequenzen) verwendet werden. Hierbei ist nämlich gewährleistet, daß der Erstlink (erster Abschnitt eines Alternativweges) frei ist, so daß zum Processing Load Ratio gegebenenfalls nur das Crankback des zweiten Links (zweiter Abschnitt des Alternativweges) eingeht.

Der in den Simulationen gemäß einer dritten Kurve K3 fest gewählte BIAS-Term vermindert die Schätzfehler für das Prädiktionsintervall dT (dT = 10 s). Diese Ausführungsform der Erfindung ist insbesondere für eine weitgehende Hardware-Realisierung des Route Processings interessant, weil hierbei das vorhandene Call Processing nicht tangiert würde.

Werden zusätzlich die Belegungszustände aus den Zweitlinks der Alternativwege importiert, so gelingt eine weitere Absenkung des Processing Load Ratios auf exemplarische Maximalwerte der Größe 1,06. Dieser Umstand wird durch eine vierte Kurve K4 und eine fünfte Kurve K5 veranschaulicht, wobei die vierte Kurve ohne BIAS-Reservierung und die fünfte Kurve unter Zugrundelegung eines BIAS-Wertes von 5 ermittelt wurde. Diese Ausführungsform der Erfindung ist daher insbesondere für ihre weitgehende Software-Realisierung in bestehenden Hardware-Systemumgebungen geeignet.

## Patentansprüche

1. Verfahren zur nichthierarchischen Verkehrslenkung in einem Kommunikationsnetz, das
a) mehrere Vermittlungsknoten umfaßt, die über Verbindungsstrecken (Links) so miteinander vermascht sind, daß zwischen zwei solchen Vermittlungsknoten mehrere Verbindungswege vorhanden sind,
demgemäß

b) der Verkehr zwischen zwei solchen Vermittlungsknoten über wenigstens einen Planweg (D) gelenkt wird,
c) der genannte Verkehr nach einer Alternativwegesequenz (AWS) über Alternativwege (AW) gelenkt wird, wenn eine Verbindung über einen Planweg nicht möglich ist,
d) die Alternativwegesequenz (AWS) eine nach steigenden Verkehrsbelastungszuständen geordnete Reihenfolge von Alternativwegen darstellt und periodisch in echtzeitnahen Zeitintervallen ermittelt wird,

**dadurch gekennzeichnet,**

e) daß die genannte Alternativwegesequenz (AWS) im jeweiligen Ursprungsvermittlungsknoten ermittelt wird,
f) und daß die Alternativwegesequenz aus einer vorgegebenen Menge von Alternativwegen (AW) ermittelt wird, wobei ein Alternativweg, dessen Verkehrsbelastungszustand einen bestimmten Schwellwert überschreitet, nicht in die Alternativwegesequenz mitaufgenommen wird.

2. Verfahren nach Anspruch 1
**dadurch gekennzeichnet,**
daß der Verkehrsbelastungszustand eines Alternativweges (AW) anhand des Belegungszustandes der von dem Ursprungsvermittlungsknoten abgehenden Erst-Link des Alternativweges eingestuft wird.

3. Verfahren nach Anspruch 1 oder 2,

**dadurch gekennzeichnet,**
daß der Verkehrsbelastungszustand eines Alternativweges (AW) bezüglich der Folge-Links anhand von Blockierungserfahrungen eingestuft wird.

4. Verfahren gemäß Anspruch 1
**dadurch gekennzeichnet,**
daß der Verkehrsbelastungszustand eines Alternativweges (AW) anhand des Belegungszustandes aller den Alternativweg bildenden Verbindungsstrecken und der Verfügbarkeit der auf dem Alternativweg liegenden Zwischenvermittlungsknoten eingestuft wird.

5. Verfahren gemäß einem der Ansprüche 1 bis 4,
**dadurch gekennzeichnet,**
daß der bestimmte Schwellwert linkspezifisch und echtzeitnah in Abhängigkeit der über ein Prädiktionsintervall gemittelten Differenz zwischen Rufankünften und Verbindungsbeendigungen (Call Completion) verändert wird.

## Claims

1. Method for the non-hierarchical routing of traffic in a communications network which
a) comprises a number of switching nodes which are intermeshed with one another via links in such a manner that a number of connection paths exist between two such switching nodes,
in accordance with which

b) the traffic between two such switching nodes is directed via at least one planned route (D),
c) the said traffic is directed via alternate routes (AW) in accordance with an alternate route sequence (AWS) when a connection via a planned route is not possible,
d) the alternate-route sequence (AWS) represents an order of alternate routes ordered in accordance with increasing traffic loading states and is periodically determined in near-real-time time intervals,

characterized in that

e) the said alternate-route sequence (AWS) is determined in the respective originating switching node,
f) and in that the alternate-route sequence is determined from a predetermined set of alternate routes (AW), an alternate route, the traffic load condition of which exceeds a certain threshold value, not also being included in the alternate-route sequence.

2. Method according to Claim 1, characterized in that the traffic load condition of an alternate route (AW) is graded by means of the busy/idle state of the outgoing primary link of the alternate route from the originating switching node.

3. Method according to Claim 1 or 2, characterized in that the traffic load condition of an alternate route (AW) is graded by means of blocking experience with respect to the successor links.

4. Method according to Claim 1, characterized in that the traffic load condition of an alternate route (AW) is graded by means of the busy/idle state of all links forming the alternate route and the availability of the intermediate switching nodes located on the alternate route.

5. Method according to one of Claims 1 to 4, characterized in that the particular threshold value is modified link-specifically and in near-real-time in dependence on the difference, averaged over a prediction interval, between call arrivals and call completions.

## Revendications

1. Procédé d'acheminement non hiérarchique de trafic dans un réseau de communication, qui
a) comporte plusieurs points nodaux de commutation qui sont maillés entre eux par des sections de liaison (maillons) de manière que plusieurs voies de liaison soit présentes entre deux points nodaux de commutation de ce genre,
suivant lequel

b) le trafic entre deux points nodaux de commutation de ce genre est acheminé par l'intermédiaire d'au moins une voie (D) planifiée,
c) ledit trafic est acheminé suivant une séquence (AWS) de voies détournées, par l'intermédiaire de voies (AW) détournées, si une liaison par l'intermédiaire d'une voie planifiée n'est pas possible,
d) la séquence (AWS) de voies détournées représente une succession de voies détournées classées suivant des états croissants de charge de trafic et est déterminée périodiquement pendant des intervalles de temps presque en temps réel,

caractérisé en ce que

e) on détermine ladite séquence (AWS) de voies détournées dans le point nodal initial associé de commutation,
f) et on détermine la séquence de voies détournées à partir d'un ensemble prescrit de voies (AW) détournées, une voie détournée dont l'état de charge de trafic est supérieur à une valeur seuil déterminée n'étant pas acceptée dans la séquence de voies détournées.

2. Procédé suivant la revendication 1, caractérisé en ce que l'on échelonne l'état de charge de trafic d'une voie (AW) détournée, à l'aide de l'état d'occupation des premiers maillons de la voie détournée partant du point nodal initial.

3. Procédé suivant la revendication 1 ou 2, caractérisé en ce que l'on échelonne l'état de charge de trafic d'une voie (AW) détournée par rapport aux maillons successifs, à l'aide d'expériences de blocage.

4. Procédé suivant la revendication 1, caractérisé en ce que l'on échelonne l'état de charge de trafic d'une voie (AW) détournée, à l'aide de l'état d'occupation de tous les tronçons de liaison formant la voie détournée et de la disponibilité des points nodaux intermédiaires de commutation se trouvant sur la voie détournée.

5. Procédé suivant l'une des revendications 1 4, caractérisé en ce que l'on modifie, de manière spécifique aux maillons et presque en temps réel, la valeur de seuil déterminée, en fonction de la différence entre des arrivées d'appel et des achèvements de liaison (Call Completition) dont on fait la moyenne sur un intervalle de prédiction.

## FIG 1

## FIG 2

RT (D)

| SEQ | VW |
|-----|-----|
| 1 | D |
| 2 | AW |

RP    AWS

LTSM

| L1 (A) | TN | L2 (D) |
|--------|-------|--------|
| 6 | C (0) | 4 |
| 0 | B (1) | 6 |
| 12 | E (1) | 18 |
| 8 | F (1) | 12 |

FIG 3

dNHR : TR = 4 , n = 100

EP 0 608 279 B1

FIG 4